# EUROPÄISCHE PATENTSCHRIFT

(11) **EP 3 237 117 B1**
(45) Veröffentlichungstag und Bekanntmachung des Hinweises auf die Patenterteilung: **03.07.2024**
(21) Anmeldenummer: 15805394.2
(22) Anmeldetag: 07.12.2015
(51) Int. Cl.: B05C 5/02, B05C 11/10, F16L 27/08, B05B 15/00

(54) **DREHDURCHFÜHRUNG EINER LEIMVENTILEINHEIT**
ROTARY FEEDTHROUGH OF A GLUE VALVE UNIT
PASSAGE TOURNANT D'UN BLOC DE VANNE D'ENCOLLAGE

(30) Priorität: 22.12.2014 DE 102014018969
(43) Veröffentlichungstag der Anmeldung: 01.11.2017
(73) Patentinhaber: Focke & Co. (GmbH & Co. KG), 27283 Verden (DE)
(72) Erfinder: WALTER, Jan-Christian, 21357 Bardowick (DE); NEUHAUS, Nils, 21614 Buxtehude (DE)
(74) Vertreter: Aulich, Martin
(86) Internationale Anmeldenummer: PCT/EP2015/002458
(87) Internationale Veröffentlichungsnummer: WO 2016/102043

(56) Entgegenhaltungen:
- US-A- 2 655 391
- US-A- 4 524 887
- US-A1- 2005 235 909
- US-A1- 2008 217 360

## Beschreibung

Die vorliegende Erfindung betrifft eine Leimventilanordnung mit einem Leimventil mit einem steuerbaren, insbesondere elektromagnetisch betriebenem Dosierorgan zur Ausgabe von Leim, insbesondere von Heißleim, mit einem Grundkörper mit zu dem Dosierorgan führendem Leimkanal, mit einer separaten, insbesondere außerhalb des Grundkörpers verlaufenden schlauchartigen Leimleitung, mit der dem Leimkanal aus einer separaten Leimquelle stammender Leim zuführbar ist, mit einer an dem Grundkörper befestigten Drehdurchführung zur gelenkigen Verbindung der schlauchartigen Leimleitung mit dem Grundkörper, und mit einem Filter zur Filterung des Leims.

Derartige Leimventilanordnungen mit steuerbaren Dosier- bzw. Verschlussorganen bzw. mit einem oder mehreren Leimventilen mit solchen Organen sind seit Langem bekannt. Insbesondere in der Zigarettenindustrie werden derartige Leimventilanordnungen verbreitet mit Heißleim betrieben. Dabei werden verschiedenste Bauteile der Leimventilanordnung gezielt erwärmt und auf einer definierten Temperatur gehalten, um während des gesamten Betriebs die Ausgabe definierter Leimportionsgrößen garantieren zu können. Denn die Viskosität und letztlich auch die Größe der jeweiligen Leimportion, die während der jeweiligen Öffnungsperiode des Dosierorgans aus dem jeweiligen Leimventil der Leimventilanordnung austritt, hängen von der Leimtemperatur ab. Um zu verhindern, dass das Dosierorgan durch Verunreinigungen des Leims oder dergleichen verstopft wird, wird der Leim durch einen im Stand der Technik im Grundkörper der Leimventilanordnung bzw. des jeweiligen Leimventils eingesetzten Filter gefiltert, wie beispielsweise in der US 2005/0235909 A1. Hierbei ist unter anderem nachteilig, dass ein Wechsel des Filters nur im flüssigen, heißen Zustand des Leims möglich ist. Dabei besteht akute Verbrennungsgefahr für den Werker, der mit dem Filterwechsel betraut ist. Im Übrigen müssen in den in der Regel massiven Grundkörper entsprechende Bohrungen eingebracht werden, um den Filter geeignet platzieren zu können. Nicht zuletzt hat der Filter einen gewissen Raumbedarf, der dazu führt, dass die entsprechenden Grundkörper nicht kompakter gebaut werden können.

Aus der US 4,524,887 ist außerdem eine Filteranordnung für einen Leimapplikator bekannt, bei dem eine Leimleitung über ein Durchführungselement mit einem Grundkörper verbunden ist. Ein Filter ist an dem Durchführungselement so angeordnet, dass er in das Auslassende der Leimleitung ragt.

Es ist Aufgabe der vorliegenden Erfindung, eine Leimventilanordnung der eingangs genannten Art hierfür weiterzuentwickeln.

Diese Aufgabe wird gelöst durch eine Leimventilanordnung mit den Merkmalen des Anspruchs 1.

Erfindungsgemäß wird der Filter der Leimventilanordnung nicht mehr in dem Grundkörper der Ventilanordnung untergebracht, sondern der Filter ist der zum Großteil außerhalb des Grundkörpers angeordneten Drehdurchführung zugeordnet, die die gelenkige Verbindung der schlauchartigen Leimleitung mit dem Grundköper herstellt. Diese gelenkige Verbindung ermöglicht Relativbewegungen zwischen diesen Bauteilen, beispielsweise zu Wartungs- oder Montagezwecken. Den Filter nicht mehr im Grundkörper unterzubringen, sondern der Drehdurchführung zuzuordnen, erlaubt eine deutlich kompaktere Bauform des Grundkörpers. Weiter kann der Filter leichter und für den Bediener sicherer gewechselt werden. Auch kann auf die aufwendig herzustellenden, im Stand der Technik notwendigen Bohrungen in den Grundkörpern verzichtet werden, in die die Filter platziert werden.

Der Filter der Drehdurchführung ist einem mit dem Grundkörper lösbar - insbesondere über eine Schraubverbindung - verbundenen, bevorzugt in eine Bohrung desselben eingeschraubten Filteraufnahmeteil der Drehdurchführung zugeordnet, das mit einem ein Drehgelenk umfassenden Drehgelenkteil der Drehdurchführung lösbar verbunden ist, vorzugsweise ebenfalls über eine Schraubverbindung. Durch die lösbare Verbindung zwischen Filteraufnahmeteil und Grundkörper einerseits und andererseits zwischen Filteraufnahmeteil und Drehgelenkteil, ist ein Wechseln des Filters besonders einfach.

Denn das gesamte Filteraufnahmeteil kann schlicht durch ein neues Filteraufnahmeteil mit neuem Filter ersetzt werden.

In weiterer Ausbildung des Filteraufnahmeteils verfügt dieses über einen insbesondere zentralen Leimkanal zum Durchfluss des Leims. In diesem Leimkanal sitzt der Filter, beispielsweise sich quer zu diesem Leimkanal über den gesamten Querschnitt desselben erstreckend, sodass der Leim während des Durchflusses durch den Leimkanal durch den Filter strömen muss.

In nochmals weiterer Ausbildung des Filteraufnahmeteils bzw. der Drehdurchführung kann der Filter der Drehdurchführung mittels eines in einer insbesondere zentralen Bohrung des Filteraufnahmeteils sitzenden Pressrings in dem Leimkanal gehalten sein. Die zentrale Bohrung bildet dabei zweckmäßigerweise bevorzugt den Leimkanal oder ist Teil desselben.

Zur einfachen Montage oder Demontage der Drehdurchführung kann vorgesehen sein, dass das Filteraufnahmeteil über ein Außengewinde verfügt, das in ein passendes Innengewinde des Drehgelenkteils eingeschraubt ist.

Was das Drehgelenkteil der Drehdurchführung betrifft, so kann es über ein erstes, mit dem Filteraufnahmeteil lösbar verbundenes Anschlussteil verfügen, sowie über ein an dem ersten Anschlussteil drehbar gelagertes zweites Anschlussteil.

Vorzugsweise ist dabei das zweite Anschlussteil des Drehgelenkteils mit der schlauchartigen Leimleitung lösbar verbunden, insbesondere durch eine Schraubverbindung mit einem Leimleitungsanschlussteil der schlauchartigen Leimleitung. Mithin sind das erste und das zweite Anschlussteil relativ zueinander verdrehbar, wodurch die Relativbewegung zwischen schlauchartiger Leimleitung einerseits und Grundkörper der Ventilanordnung andererseits ermöglicht wird. Letztlich ist dann die drehbare Lagerung des zweiten Anschlussteils an dem ersten Anschlussteil Bestandteil des Drehgelenks des Drehgelenkteils.

Das Drehgelenk des Drehgelenkteils kann allgemein über nur ein einzelnes (einreihiges) Kugellager verfügen. Der Verzicht auf ein weiteres, benachbartes Kugellager ermöglicht eine kompakte Bauform. Weiter kann vorgesehen sein, dass das Drehgelenk zusätzlich zu dem einreihigen Kugellager noch über ein Gleitlager verfügt, um insgesamt sämtliche Biegemomente sicher kompensieren zu können.

Vorzugsweise kann auch ein einzelnes einreihiges Vierpunkt-Kugellager eingesetzt sein, um sicher auf ein zusätzliches Gleitlager verzichten zu können. Diese Variante ermöglicht eine nochmals kompaktere Bauform.

Der Außenring eines der oben genannten Kugellager wird bevorzugt unmittelbar durch das mit dem Filteraufnahmeteil verbundene, erste Anschlussteil des Drehgelenkteils gebildet und der Innenring desselben durch das zweite Anschlussteil des Drehgelenkteils. Es können zu diesem Zweck entsprechende umlaufende Vertiefungen für die Kugeln des Kugellagers in das erste Anschlussteil bzw. das zweite Anschlussteil eingebracht sein.

Das zweite Anschlussteil des Drehgelenkteils der Drehdurchführung ist bevorzugt gewinkelt bzw. als Winkelstück ausgebildet und verfügt über einen insbesondere zentralen Leimkanal, der sich bis zu einem dem Filteraufnahmeteil zugewandten Endstück des zweiten Anschlussteils erstreckt, das drehbar gelagert in einer zentralen Bohrung des ersten Anschlussteils sitzt. Das andere Endstück des zweiten Anschlussteils, das in Richtung der schlauchartigen Leimleitung zeigt, würde entsprechend winklig, insbesondere senkrecht, zu dem dem Filteraufnahmeteil zugewandten Endstück verlaufen.

Die vorgenannte Winkligkeit des zweiten Anschlussteils bzw. dessen Ausbildung als Winkelstück sorgt dann für den gewünschten Freiheitsgrad der Drehdurchführung bzw. dafür, dass der Leimschlauch zusammen mit dem anderen Endstück des zweiten Anschlussteils in einer Ebene gedreht bzw. verschwenkt werden kann, die winklig, insbesondere senkrecht, zu der Drehachse verläuft, um die das dem Filteraufnahmeteil zugewandte Endstück - durch dessen drehbare Lagerung in der zentralen Bohrung des ersten Anschlussteils - rotieren kann.

Alternativ kann aber auch vorgesehen sein, dass das zweite Anschlussteil gerade bzw. ungewinkelt ausgebildet ist. Die beiden Endstücke des zweiten Anschlussteils würden entsprechend nicht winklig zueinander verlaufen, sondern entlang einer gemeinsamen geraden Achse.

Was den Leimkanal des zweiten Anschlussteils betrifft, so mündet er bevorzugt in den Leimkanal des Filteraufnahmeteils der Drehdurchführung, wobei zur (radialen) Abdichtung das das entsprechende Leimkanalende umfassende Endstück des zweiten Anschlussteils dichtend an einer Seite einer elastischen (Ring-)Dichtung anliegt und das Filteraufnahmeteil, insbesondere der Pressring des Filteraufnahmeteils, dichtend an der anderen Seite der elastischen Dichtung.

In weiterer Ausbildung der Erfindung ist vorgesehen, dass an dem Filteraufnahmeteil der Drehdurchführung eine elastische (Ring-)Dichtung befestigt ist, die bei Befestigung des Filteraufnahmeteils an dem Grundkörper der Leimventileinheit für eine leimdichte Abdichtung zwischen Grundkörper und Filteraufnahmeteil sorgt.

Weitere Merkmale der vorliegenden Erfindung ergeben sich aus den beigefügten Patentansprüchen, der nachfolgenden Beschreibung bevorzugter Ausführungsbeispiele der Erfindung sowie aus den beigefügten Zeichnungen. Darin zeigt:
- Fig. 1: eine Draufsicht auf eine Leimventilanordnung mit mehreren einzelnen Ventilen mitsamt Drehdurchführung und schlauchartiger Leimleitung,
- Fig. 2: einen Querschnitt durch die Drehdurchführung der Leimventilanordnung aus Fig. 1 in betriebsbereitem, zusammengesetztem Zustand,
- Fig. 3: einen Querschnitt analog Fig. 3 durch eine alternative Ausführungsform der Drehdurchführung, allerdings mit in zwei Einzelbauteile, nämlich in ein Filteraufnahmeteil und in ein Drehgelenkteil demontierter Drehdurchführung.

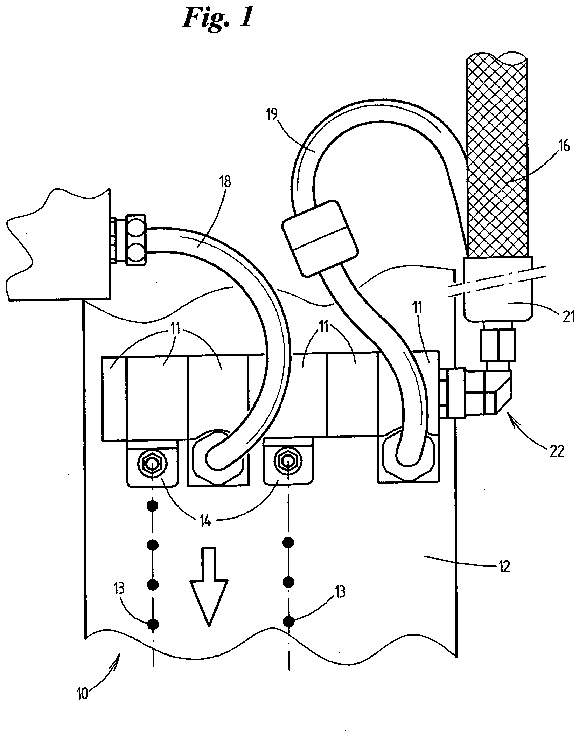

In Fig. 1 ist eine Leimventilanordnung 10 schematisch dargestellt. Sie umfasst in diesem Fall mehrere einzelne Module 11. Mehrere, vorliegend zwei dieser Module 11 verfügen jeweils über ein Leimventil 14. Eine derartige Leimventilanordnung ist beschrieben in der DE 10 2014 001 897.0, auf deren Inhalt vollumfänglich Bezug genommen wird. Die Leimventilanordnung 10 kann erfindungsgemäß natürlich auch nicht modulartig ausgebildet sein und beispielsweise nur ein Leimventil umfassen.

In dem gezeigten Ausführungsbeispiel dient die Ventilanordnung 10 zum Auftragen von Leim, nämlich vorliegend Heißleim, auf Oberflächen von bei der Herstellung von Zigarettenpackungen eingesetzten Zuschnitten aus Papier, Folie oder dergleichen.

Mit den Leimventilen 14 der Ventilanordnung 10 werden jeweils einzelne (kleine) Leimportionen auf den jeweiligen Zuschnitt 12 aufgebracht. Regelmäßig wird zu diesem Zweck der jeweilige Zuschnitt 12 relativ zu der Ventilanordnung 10 bewegt, insbesondere quer zur Längserstreckung derselben. So kann die Ventilanordnung 10 beispielsweise in einer horizontalen Ebene ortsfest positioniert sein und die zu mit dem Leim zu versehenen Zuschnitte 12 in einer dazu parallelen horizontalen Ebene unterhalb der Ventilanordnung 10 unter dieser entlang gefördert werden (Pfeilrichtung in Fig. 1). Entsprechend entstehen jeweils einzelne, senkrecht zur Vorschubrichtung des jeweiligen Zuschnitts 12 bzw. in Richtung der Längserstreckung der Ventilanordnung 10 voneinander beabstandete, parallele Leimspuren aus jeweils einzelnen Leimportionen 13.

Die Einzelmodule 11 sind in Längserstreckung der Ventilanordnung 10 aufeinanderfolgend in einer gemeinsamen Reihe angeordnet. Sie sind teilweise unterschiedlich aufgebaut bzw. haben unterschiedliche Funktionen. Zwei der in Fig. 1 gezeigten Einzelmodule weisen jeweils ein Leimventil 14 auf mit in dieses integrierter, nicht gezeigter Dosieröffnung und entsprechendem steuerbaren Dosierorgan (ebenfalls nicht dargestellt).

Die Leimventile 14 sind an sich bekannt und können beispielsweise elektromagnetisch betätigt sein.

Das Dosier- oder Verschlussorgan wird im Betrieb insbesondere taktweise zwischen einer Öffnungsstellung, in der Leim aus dem Leimventil 14 austreten kann, und einer Schließstellung, in der der Leim nicht austreten kann, hin- und her bewegt.

Die für eine Öffnungsbewegung notwendige Öffnungskraft kann beispielsweise in bekannter Weise gegen den Widerstand eines Rückholorgans durch die Magnetkraft eines steuerbaren Elektromagneten bewirkt werden. Die für eine Schließbewegung notwendige Schließkraft kann nach Abschalten des Magnetfeldes bzw. allgemein nach ausreichender Reduktion der Öffnungs- bzw. Magnetkraft durch das Rückholorgan aufgebracht werden, bspw. durch eine Feder oder durch sich abstoßende Dauermagnete.

Eine entsprechende elektronische Steuerung, an die das jeweilige Leimventil 14 angeschlossen ist, sorgt dann für die notwendigen Impulse zum Öffnen bzw. Schließen des Leimventils 14.

Jedes der Einzelmodule 11 verfügt über einen vorliegend im Wesentlichen massiven Grundkörper 15. Ein solcher Grundkörper kann aber beispielsweise auch nach Art eines Gehäuses ausgebildet sein.

In dem Grundkörper 15 verläuft jeweils mindestens ein Leimkanal bzw. die einzelnen Leimkanäle der Grundkörper 15 sind so miteinander verbunden, dass Heißleim, der über eine außerhalb des Grundkörpers 15 verlaufende schlauchartige, flexible Leimleitung/Schlauch 16 der Ventilanordnung 10 zugeführt wird, jeweils zu den einzelnen Leimventilen 14 geleitet werden kann und innerhalb derselben zu den einzelnen Dosierorganen der Leimventile 14.

In Fig. 1 ist des Weiteren ein Schlauch 18 der Ventilanordnung 10 gezeigt, in dessen Inneren Leitungen verlaufen, die von der elektronischen Steuerung für die einzelnen Module 11 bzw. Leimventile 14 zu den Modulen 11 hin verlaufen.

In einem weiteren Schlauch 19 der Ventilanordnung 10 verlaufen von einer entsprechenden Spannungsversorgungsquelle stammende Stromversorgungsleitungen, die an in den Grundkörpern 15 angeordneten Heizorganen enden, die zur Erwärmung der Grundkörper 15 und insbesondere der Leimventile 14 dienen.

Besonders wichtig ist nun eine Drehdurchführung 20 der Ventilanordnung 10, über die die beheizte Leimleitung 16 mit dem Grundkörper 15 - vorliegend eines in Fig. 1 äußeren - Einzelmoduls 11 gelenkig, nämlich drehbar verbunden ist.

Die Drehdurchführung 20 ist zum einen lösbar mit dem Grundkörper 15 verbunden, zum anderen lösbar verbunden mit einem mit der Leimleitung 16 verbundenen Anschlussteil 21.

Die Drehdurchführung 20 ist dabei leimleitend zwischen der Leimleitung 16 und dem Grundkörper 15 angeordnet. Mit anderen Worten fließt der Leim aus der Leimleitung 16 durch die Drehdurchführung 20 zu dem Grundkörper 15.

Die Drehdurchführung 20 ist so ausgebildet, dass die Leimleitung 16 relativ zu dem Grundkörper 15 verschwenkt werden kann, vorliegend in einer parallel zu derjenigen Außenseite des Grundkörpers 15 verlaufenden Ebene, an der die Drehdurchführung 20 befestigt ist. Natürlich können auch andere Dreh- bzw. Schwenkebenen vorgesehen sein.

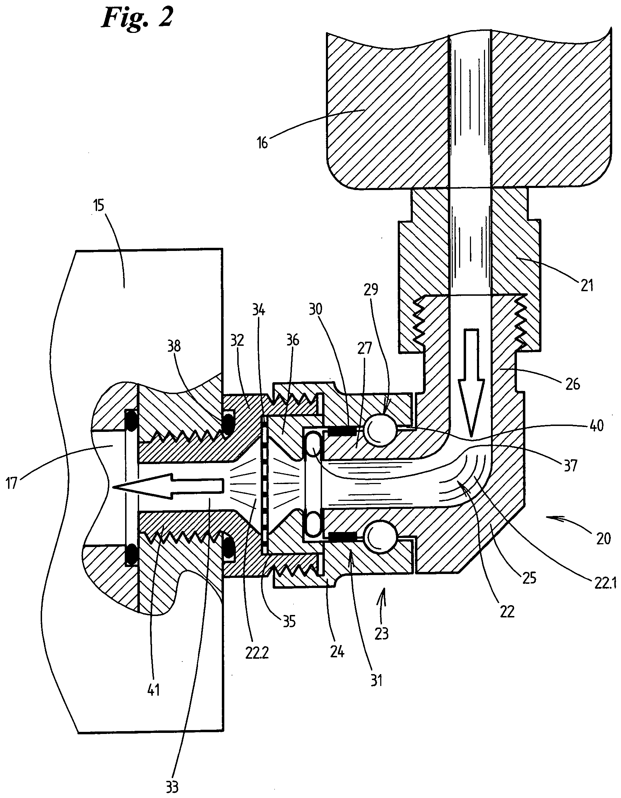

Die Drehdurchführung 20 verfügt über einen zentralen Leimkanal 22, der in den in Fig. 2 gezeigten Leimkanal 17 des Grundkörpers 15 mündet. Der über den Leimkanal 17 zugeführte Leim wird im Inneren der Einzelmodule 11, insbesondere in den entsprechenden Grundkörpern 15, an die einzelnen Leimventile 14 verteilt, ggf. über weitere anschließende Leimkanäle.

Der Leimkanal 22 der Drehdurchführung 20 setzt sich aus einzelnen Teilabschnitten 22.1 und 22.2 zusammen.

Der Leimkanalabschnitt 22.1 verläuft innerhalb eines Drehgelenkteils 23 der Drehdurchführung 20.

Das Drehgelenkteil 23 setzt sich vorliegend zusammen aus einem ersten Anschlussteil 24 und einem zweiten Anschlussteil 25.

Das zweite Anschlussteil 25 des Drehgelenkteils 23 der Drehdurchführung 20 ist an einem Ende, nämlich einem ersten, der Leimleitung 16 zugewandten Endstück 26, mit dem Anschlussteil 21 der Leimleitung 16 lösbar verbunden, vorliegend mit diesem verschraubt.

Das andere Ende des zweiten Anschlussteils 25, nämlich ein zweites Endstück 27 desselben, verläuft winklig, vorliegend senkrecht zu dem ersten Endstück 26.

Das zweite Endstück 27 ist des Weiteren drehbar an dem ersten Anschlussteil 24 gelagert. Konkret greift es in eine zentrale Bohrung 40 des ersten Anschlussteils 24 ein und ist dort in der in der in Fig. 2 gezeigten Ausführungsform mittels eines einreihigen Kugellagers 29 sowie eines Gleitlagers 30 drehbar gelagert.

Die radiale Innenseite des ersten Anschlussteils 24 und die radiale Außenseite des zweiten Anschlussteils 25, konkret des zweiten Endstücks 27 des zweiten Anschlussteils 25, bilden dabei den Außenring bzw. den Innenring des Kugellagers 29. Genauer gesagt sind entsprechende ringförmige Vertiefungen in die entsprechenden Flächen des ersten Anschlussteils 24 bzw. des zweiten Anschlussteils 25 eingearbeitet.

Das Kugellager 29 und das Gleitlager 30 bilden zusammen mit dem ersten Anschlussteil 24 und dem zweiten Anschlussteil 25 bzw. dem zweiten Endstück 27 des zweiten Anschlussteils 25 letztlich ein Drehgelenk 31 des Drehgelenkteils 23 aus.

Lösbar verbunden mit dem Drehgelenkteil 23, konkret mit dem ersten Anschlussteil 24, ist ein Filteraufnahmeteil 32 der Drehdurchführung 20. Vorliegend ist das Filteraufnahmeteil 32 mit dem Drehgelenkteil 23 bzw. dem ersten Anschlussteil 24 lösbar verschraubt.

Das Filteraufnahmeteil 32 verfügt über eine zentrale Bohrung 33, die im Ergebnis den weiteren Leimkanalabschnitt 22.2 der Drehdurchführung 20 bildet. Der Leimkanalabschnitt 22.1 mündet dabei in Fließrichtung des Leims in den Leimkanalabschnitt 22.2. Die Bohrung 33 des Filteraufnahmeteils 32 weitet sich in Richtung des mit dem Drehgelenkteil 23 verbundenen Endes des Filteraufnahmeteils 32 auf.

In der Bohrung 33, vorliegend in einem aufgeweiteten, einen Aufnahmebereich 35 des Filteraufnahmeteils 32 bildenden Abschnitt desselben ist ein an sich bekannter Filter 34 zur Filterung des durch diesen fließenden Leims angeordnet.

Der Filter 34 erstreckt sich quer zur Bohrung 33 bzw. zum Leimkanalabschnitt 22.2. Der Aufnahmebereich 35 ist vorliegend (hohl-)zylindrisch ausgebildet. Der Filter 34 erstreckt sich über den gesamten Querschnitt des Leimkanalabschnitts 22.2.

Gehalten wird der Filter 34 in seiner Position durch einen Pressring 36, der in den Aufnahmebereich 35 mit Übermaß eingepresst ist.

Zur Abdichtung zwischen dem zweiten Endstück 27 des zweiten Anschlussteils 25 des Drehgelenkteils 23 einerseits und dem Filteraufnahmeteil 32 andererseits, ist eine Dichtung 37 vorgesehen, vorliegend eine elastische Ringdichtung. An der Ringdichtung 37 liegt einerseits eine freie Endfläche des zweiten Endstücks 27 dichtend an, andererseits eine freie Endfläche des Pressrings 36.

Das Filteraufnahmeteil 32 ist auf der dem Grundkörper 15 zugewandten Seite mit diesem Grundkörper 15 mittels einer Schraubverbindung verbunden. Vorliegend ist ein Endstück 41 des Filteraufnahmeteils 32 in eine passende Gewindebohrung in dem Grundkörper 15 eingeschraubt.

Zur Abdichtung zwischen dem Filteraufnahmeteil 32 und dem Grundkörper 15 ist zwischen diesen Bauteilen eine elastische (Ring-)Dichtung 38 angeordnet. Die Dichtung 38 ist dabei an dem Filteraufnahmeteil 32 befestigt.

Die gezeigte Ausgestaltung der Drehdurchführung 20 mit lösbar miteinander verbundenen Bauteilen, insbesondere dem lösbar mit dem Grundkörper 15 einerseits und dem Drehgelenkteil 23 andererseits verbundenen Filteraufnahmeteil 32 mit Filter 34, bietet unter anderem den besonderen Vorteil, den Filter 34 leicht bei Bedarf austauschen zu können.

Für diesen Fall kann das gesamte Filteraufnahmeteil 32 mit entsprechend auswechselbedürftigem Filter 34 schlicht durch ein neues Filteraufnahmeteil 32 mit neuem Filter 34 ersetzt werden. Hierfür muss nur die Verbindung bzw. Verschraubung zwischen dem Filteraufnahmeteil 32 und dem Grundkörper 15 gelöst werden sowie die Verbindung zwischen dem Filteraufnahmeteil 32 und dem Drehgelenkteil 23. Anschließend kann dann das neue Filteraufnahmeteil 32 mit den vorgenannten Bauteilen verbunden bzw. verschraubt werden.

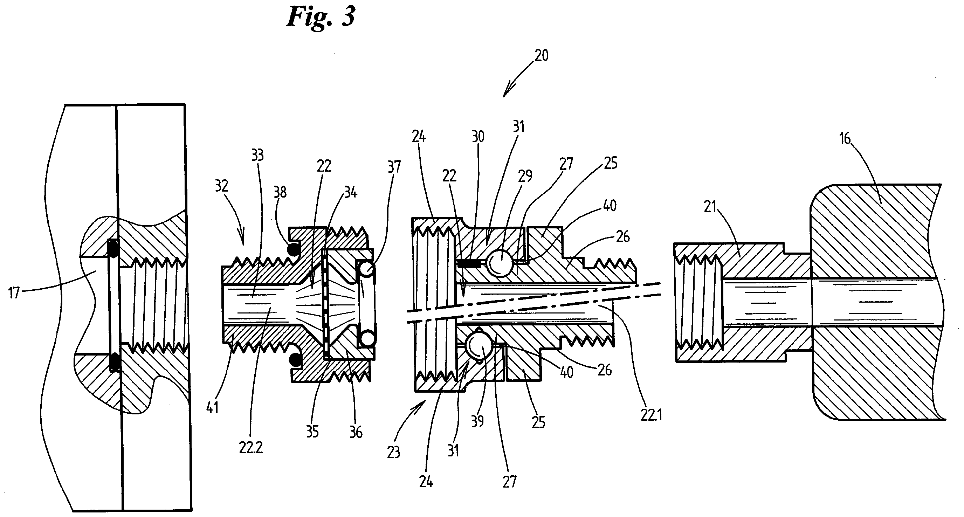

In Fig. 3 ist anhand einer Drehdurchführung 20 mit zwei alternativen Ausführungsformen des Drehgelenkteils 23 die Demontierbarkeit der vorgenannten Bauteile angedeutet.

Beide Alternativen des Drehgelenkteils 23 der Fig. 3, optisch voneinander getrennt durch eine strichpunktierte Doppellinie, unterscheiden sich von dem Drehgelenkteil 23 der Fig. 2 zum einen dadurch, dass bei dem Drehgelenkteil 23 der Fig. 3 das zweite Anschlussteil 25 nicht als Winkelstück ausgebildet ist, sondern als gerades, insbesondere symmetrisch zu einer Längsmittelachse ausgebildetes Bauteil.

Mithin sind das erste und das zweite Endstück 26, 27 des zweiten Anschlussteils 25 hintereinander entlang einer gemeinsamen geradlinigen Achse angeordnet. Aus diesem Grund fällt die Drehachse, um die die schlauchartige Leimleitung 16 durch die drehbare Lagerung des zweiten Anschlussteils 25 an dem ersten Anschlussteil 24 gedreht werden kann, mit der Drehachse zusammen, um die das Endstück 27 des zweiten Anschlussteils 25 gedreht werden kann.

Die Ausführungsform des Drehgelenkteils 23, die unterhalb der strichpunktierten Doppellinie dargestellt ist, unterscheidet sich zudem von der Lösung aus Fig. 2 dadurch, dass anstelle des Kugellagers 29 und des Gleitlagers 30 ein Vierpunktkugellager 39 verwendet ist.

Durch die Nutzung des Vierpunktkugellagers 39 kann bei Beibehaltung der geforderten Aufnahme der Biegemomente das erste Anschlussteil 24 und infolgedessen auch das zweite Anschlussteil 25 kürzer ausgeführt werden, da die Drehlagerung durch ausschließlich ein einzelnes Vierpunktkugellager weniger Raum einnimmt als die Drehlagerung mit Hilfe einer Kombination aus normalem einreihigen Kugellager und Gleitlager.

Natürlich kann das Vierpunktkugellager auch bei der Ausführungsform des Drehgelenkteils 23 der Fig. 2 eingesetzt werden.

### Bezugszeichenliste

| | | | |
|---|---|---|---|
| 10 | Leimventilanordnung | 41 | Endstück |
| 11 | Einzelmodul | | |
| 12 | Zuschnitt | | |
| 13 | Leimportion | | |
| 14 | Ventileinheit | | |
| 15 | Grundkörper | | |
| 16 | Leimleitung | | |
| 17 | Leimkanal | | |
| 18 | Schlauch | | |
| 19 | Schlauch | | |
| 20 | Drehdurchführung | | |
| 21 | Anschlussteil | | |
| 22 | Leimkanal | | |
| 22.1 | Teilabschnitt | | |
| 22.2 | Teilabschnitt | | |
| 23 | Drehgelenkteil | | |
| 24 | erstes Anschlussteil | | |
| 25 | zweites Anschlussteil | | |
| 26 | erstes Endstück | | |
| 27 | zweites Endstück | | |
| 29 | Kugellager | | |
| 30 | Gleitlager | | |
| 31 | Drehgelenk | | |
| 32 | Filteraufnahmeteil | | |
| 33 | Bohrung | | |
| 34 | Filter | | |
| 35 | Aufnahmebereich | | |
| 36 | Pressring | | |
| 37 | Dichtung | | |
| 38 | (Ring-)Dichtung | | |
| 39 | Vierpunktkugellager | | |
| 40 | Bohrung | | |

## Patentansprüche

1. Leimventilanordnung mit einem steuerbaren, insbesondere elektromagnetisch betriebenen Dosierorgan zur Ausgabe von Leim, mit einem Grundkörper (15) mit zu dem Dosierorgan führendem Leimkanal, mit einer schlauchartigen Leimleitung (16), mit der dem Leimkanal aus einer separaten Leimquelle stammender Leim zuführbar ist, mit einer an dem Grundkörper (15) lösbar befestigten Drehdurchführung (20) zur gelenkigen Verbindung der schlauchartigen Leimleitung (16) mit dem Grundkörper (15), und mit einem Filter (34) zur Filterung des Leims, **dadurch gekennzeichnet, dass** der Filter (34) einem mit dem Grundkörper (15) lösbar verbundenen, insbesondere in eine Bohrung desselben eingeschraubten Filteraufnahmeteil (32) der Drehdurchführung (20) zugeordnet ist, das mit einem ein Drehgelenk (31) umfassenden Drehgelenkteil (23) der Drehdurchführung (20) lösbar verbunden ist, insbesondere über eine Schraubverbindung.

2. Leimventilanordnung gemäß Anspruch 1, **dadurch gekennzeichnet, dass** das Filteraufnahmeteil (32) über einen insbesondere zentralen Leimkanal (22.2) zum Durchfluss von Leim verfügt, in dem der Filter (34) sitzt.

3. Leimventilanordnung gemäß Anspruch 1 oder 2, **dadurch gekennzeichnet, dass** der Filter (34) mittels eines in einer insbesondere zentralen Bohrung (33) des Filteraufnahmeteils (32) sitzenden Pressrings (36) in dem Leimkanal (22.2) gehalten ist.

4. Leimventilanordnung gemäß einem oder mehreren der Ansprüche 1 bis 3, **dadurch gekennzeichnet, dass** das Filteraufnahmeteil (32) über ein Außengewinde verfügt, das in ein passendes Innengewinde des Drehgelenkteils (23) eingeschraubt ist.

5. Leimventilanordnung gemäß einem oder mehreren der Ansprüche 1 bis 4, **dadurch gekennzeichnet, dass** das Drehgelenkteil (23) der Drehdurchführung (20) über ein erstes mit dem Filteraufnahmeteil (32) lösbar verbundenes Anschlussteil (24) verfügt sowie über ein an dem ersten Anschlussteil (24) drehbar gelagertes zweites Anschlussteil (25).

6. Leimventilanordnung gemäß einem oder mehreren der Ansprüche 1 bis 5, **dadurch gekennzeichnet, dass** das zweite Anschlussteil (25) des Drehgelenkteils (23) der Drehdurchführung (20) mit der schlauchartigen Leimleitung (16) lösbar verbunden ist, insbesondere durch eine Schraubverbindung mit einem Leimleitungsanschlussteil (21) der schlauchartigen Leimleitung (16).

7. Leimventilanordnung gemäß einem oder mehreren der Ansprüche 1 bis 6, **dadurch gekennzeichnet, dass** das Drehgelenk (31) des Drehgelenkteils (23) über nur ein (einreihiges) Kugellager (29) verfügt, insbesondere ein einreihiges Vierpunktkugellager (39).

8. Leimventilanordnung gemäß einem oder mehreren der Ansprüche 1 bis 7, **dadurch gekennzeichnet, dass** das Drehgelenk (31) zusätzlich zu dem (einreihigen) Kugellager (29) über ein Gleitlager (30) verfügt.

9. Leimventilanordnung gemäß einem oder mehreren der Ansprüche 1 bis 8, **dadurch gekennzeichnet, dass** der Außenring des Kugellagers (29, 39) durch das mit dem Filteraufnahmeteil (32) verbundene, erste Anschlussteil (24) des Drehgelenkteils (23) gebildet ist und der Innenring desselben durch das zweite Anschlussteil (25) des Drehgelenkteils (23).

10. Leimventilanordnung gemäß einem oder mehreren der Ansprüche 1 bis 9, **dadurch gekennzeichnet, dass** das zweite Anschlussteil (25) des Drehgelenkteils (23) gewinkelt ausgebildet ist und über einen insbesondere zentralen Leimkanal (22.1) verfügt, der sich bis zum freien Ende eines Filteraufnahmeteil (32) zugewandten Endstücks (27) des zweiten Anschlussteils (25) erstreckt, das drehbar gelagert in einer zentralen Bohrung (40) des ersten Anschlussteils (24) sitzt.

11. Leimventilanordnung gemäß einem oder mehreren der Ansprüche 1 bis 10, **dadurch gekennzeichnet, dass** der Leimkanal (22.1) des zweiten Anschlussteils (25) in den Leimkanal (22.1) des Filteraufnahmeteil (32) mündet, wobei zur (radialen) Abdichtung das das entsprechende Leimkanalende umfassende Endstück (27) des zweiten Anschlussteils (25) dichtend an einer Seite einer elastischen (Ring-)Dichtung (37) anliegt, und das Filteraufnahmeteil (32), insbesondere der Pressring (36) des Filteraufnahmeteils (32), dichtend an der anderen Seite der elastischen Dichtung (37).

12. Leimventilanordnung gemäß einem oder mehreren der Ansprüche 1 bis 11, **dadurch gekennzeichnet, dass** an dem Filteraufnahmeteil (32) eine elastische (Ring-)Dichtung (37) befestigt ist, die bei Befestigung des Filteraufnahmeteils (32) an dem Grundkörper (15) für eine leimdichte Abdichtung zwischen Grundkörper (15) und Filteraufnahmeteil (32) sorgt.

## Claims

1. A glue valve arrangement comprising a controllable, in particular electromagnetically operated metering member for the delivery of glue, comprising a main body (15) with glue duct leading to the metering member, comprising a tubular glue line (16), with which glue originating from a separate glue source can be fed to the glue duct, comprising a rotary feedthrough (20), detachably fastened to the main body (15), for the articulated connection of the tubular glue line (16) to the main body (15), and comprising a filter (34) for the filtering of the glue, **characterized in that** the filter (34) is assigned to a filter receiving part (32) of the rotary feedthrough (20), which filter receiving part is detachably connected to the main body (15), and in particular is screwed into a bore of this same, and is detachably connected to a pivot joint part (23), comprising a pivot joint (31), of the rotary feedthrough (20), in particular via a screw joint.

2. The glue valve arrangement as claimed in claim 1, **characterized in that** the filter receiving part (32) possesses an in particular central glue duct (22.2) for the passage of glue, in which glue duct the filter (34) is seated.

3. The glue valve arrangement as claimed in claim 1 or 2, **characterized in that** the filter (34) is held in the glue duct (22.2) by means of a pressing ring (36) seated in an in particular central bore (33) of the filter receiving part (32).

4. The glue valve arrangement as claimed in one or more of claims 1 to 3, **characterized in that** the filter receiving part (32) possesses an external thread, which is screwed into a fitting internal thread of the pivot joint part (23).

5. The glue valve arrangement as claimed in one or more of claims 1 to 4, **characterized in that** the pivot joint part (23) of the rotary feedthrough (20) possesses a first connector (24) detachably connected to the filter receiving part (32), as well as a second connector (25) rotatably mounted on the first connector (24).

6. The glue valve arrangement as claimed in one or more of claims 1 to 5, **characterized in that** the second connector (25) of the pivot joint part (23) of the rotary feedthrough (20) is detachably connected to the tubular glue line (16), in particular by a screw joint to a glue line connector (21) of the tubular glue line (16).

7. The glue valve arrangement as claimed in one or more of claims 1 to 6, **characterized in that** the pivot joint (31) of the pivot joint part (23) possesses just one (single-row) ball bearing (29), in particular a single-row four-point ball bearing (39).

8. The glue valve arrangement as claimed in one or more of claims 1 to 7, **characterized in that** the pivot joint (31) possesses, in addition to the (single-row) ball bearing (29), a slide bearing (30).

9. The glue valve arrangement as claimed in one or more of claims 1 to 8, **characterized in that** the outer ring of the ball bearing (29, 39) is formed by the first connector (24), connected to the filter receiving part (32), of the pivot joint part (23), and the inner ring of this same by the second connector (25) of the pivot joint part (23).

10. The glue valve arrangement as claimed in one or more of claims 1 to 9, **characterized in that** das second connector (25) of the pivot joint part (23) is of angled configuration and possesses an in particular central glue duct (22.1), which extends up to the free end of an end piece (27), facing the filter receiving part (32), of the second connector (25), which end piece sits rotatably mounted in a central bore (40) of the first connector (24).

11. The glue valve arrangement as claimed in one or more of claims 1 to 10, **characterized in that** the glue duct (22.1) of the second connector (25) opens out into the glue duct (22.1) of the filter receiving part (32), wherein, for the (radial) sealing, that end piece (27) of the second connector (25) which encompasses the appropriate glue duct end bears sealingly against one side of an elastic (ring) seal (37), and the filter receiving part (32), in particular the pressing ring (36) of the filter receiving part (32), bears sealingly against the other side of the elastic seal (37).

12. The glue valve arrangement as claimed in one or more of claims 1 to 11, **characterized in that** to the filter receiving part (32) is fastened an elastic (ring) seal (37), which, when the filter receiving part (32) is fastened to the main body (15), ensures a glue-tight sealing between main body (15) and filter receiving part (32).

## Revendications

1. Ensemble formant soupape à colle, ledit ensemble comprenant un élément de dosage commandable, en particulier à fonctionnement électromagnétique, destiné à distribuer de la colle, un corps de base (15) pourvu d'un conduit de colle menant à l'élément de dosage, une conduite de colle (16) de type tuyau qui permet d'amener la colle, provenant d'une source de colle séparée, au conduit de colle, un passage rotatif (20) fixé de manière amovible au corps de base (15) et destiné à relier de manière articulée la conduite de colle (16) de type tuyau au corps de base (15), et un filtre (34) destiné à filtrer la colle, **caractérisé en ce que** le filtre (34) est associé à une partie de réception de filtre (32) du passage rotatif (20) qui est reliée de manière amovible au corps de base (15), en particulier vissée dans un alésage de celui-ci, et qui est reliée de manière amovible à une partie à articulation rotative (23) du passage rotatif (20), laquelle comprend une articulation rotative (31), notamment par le biais d'une liaison à vis.

2. Ensemble formant soupape à colle selon la revendication 1, **caractérisé en ce que** la partie de réception de filtre (32), dans laquelle siège le filtre (34), comporte un conduit de colle (22.2), notamment central, destiné à l'écoulement de la colle.

3. Ensemble formant soupape à colle selon la revendication 1 ou 2, **caractérisé en ce que** le filtre (34) est maintenu dans le conduit de colle (22.2) au moyen d'une bague de pression (36) siégeant dans un alésage (33), notamment central, de la partie de réception de filtre (32).

4. Ensemble formant soupape à colle selon une ou plusieurs des revendications 1 à 3, **caractérisé en ce que** la partie de réception de filtre (32) comporte un filetage extérieur qui est vissé dans un filetage intérieur correspondant de la partie à articulation rotative (23).

5. Ensemble formant soupape à colle selon une ou plusieurs des revendications 1 à 4, **caractérisé en ce que** la partie à articulation rotative (23) du passage rotatif (20) comporte une première partie de raccordement (24) qui est reliée de manière amovible à la partie de réception de filtre (32) et une deuxième partie de raccordement (25) qui est montée de manière rotative sur la première partie de raccordement (24).

6. Ensemble formant soupape à colle selon une ou plusieurs des revendications 1 à 5, **caractérisé en ce que** la deuxième partie de raccordement (25) de la partie à articulation rotative (23) du passage rotatif (20) est reliée de manière amovible à la conduite de colle (16) de type tuyau, notamment par une liaison à vis avec une partie de raccordement de conduite de colle (21) de la conduite de colle (16) de type tuyau.

7. Ensemble formant soupape à colle selon une ou plusieurs des revendications 1 à 6, **caractérisé en ce que** l'articulation rotative (31) de la partie à articulation rotative (23) ne comporte qu'un seul roulement à billes (à une rangée) (29), en particulier un roulement à billes à quatre points à une rangée (39) .

8. Ensemble formant soupape à colle selon une ou plusieurs des revendications 1 à 7, **caractérisé en ce que** l'articulation rotative (31) comporte en plus du roulement à billes (à une rangée) (29) un palier lisse (30) .

9. Ensemble formant soupape à colle selon une ou plusieurs des revendications 1 à 8, **caractérisé en ce que** la bague extérieure du roulement à billes (29, 39) est formée par la première partie de raccordement (24) de la partie à articulation rotative (23) qui est reliée à la partie de réception de filtre (32) et la bague intérieure dudit roulement à billes est formée par la deuxième partie de raccordement (25) de la partie à articulation rotative (23).

10. Ensemble formant soupape à colle selon une ou plusieurs des revendications 1 à 9, **caractérisé en ce que** la deuxième partie de raccordement (25) de la partie à articulation rotative (23) est coudée et comporte un conduit de colle (22.1), notamment central, qui s'étend jusqu'à l'embout (27) de la deuxième partie de raccordement (25) qui est dirigé vers l'extrémité libre d'une partie de réception de filtre (32) et qui est monté de manière rotative dans un alésage central (40) de la première partie de raccordement (24).

11. Ensemble formant soupape à colle selon une ou plusieurs des revendications 1 à 10, **caractérisé en ce que** le conduit de colle (22.1) de la deuxième partie de raccordement (25) débouche dans le conduit de colle (22.1) de la partie de réception de filtre (32), l'étanchéité (radiale) étant obtenue **en ce que** l'embout (27) de la deuxième partie de raccordement (25), lequel comprend l'extrémité de conduit de colle correspondante, vient en appui de manière étanche sur un côté d'un joint élastique (annulaire) (37), et la partie de réception de filtre (32), en particulier la bague de pression (36) de la partie de réception de filtre (32), vient en appui de manière étanche sur l'autre côté du joint élastique (37).

12. Ensemble formant soupape à colle selon une ou plusieurs des revendications 1 à 11, **caractérisé en ce qu'**un joint élastique (annulaire) (37) est fixé à la partie de réception de filtre (32) et assure une étanchéité entre le corps de base (15) et la partie de réception de filtre (32) vis-à-vis de la colle lorsque la partie de réception de filtre (32) est fixée au corps de base (15).
